# EUROPEAN PATENT SPECIFICATION

(11) **EP 3 932 196 B1**
(45) Date of publication and mention of the grant of the patent: **28.05.2025**
(21) Application number: 21183548.3
(22) Date of filing: 02.07.2021
(51) Int. Cl.: A01K 80/00, E02F 3/92, E02F 5/28

(54) **SWORD BAR FOR DREDGE FISHING**
SCHWERTSTANGE ZUM AUSBAGGERN
BARRE TRANCHANTE POUR PÊCHE À LA DRAGUE

(30) Priority: 03.07.2020 GB 202010246
(43) Date of publication of application: 05.01.2022
(73) Proprietor: Birch, Peter Tristan, Castle Douglas Dumfries & Galloway DG7 3PW (GB)
(72) Inventor: Birch, Peter Tristan, Castle Douglas Dumfries & Galloway DG7 3PW (GB)
(74) Representative: Wallace, Stuart

(56) References cited:
- FR-A- 1 251 283
- US-A- 521 918
- US-A- 6 109 013

## Description

### Field of the Invention

The present relates to fishing equipment, more particularly commercial trawler/dredging equipment, especially improvements related to sword bars and their manufacture.

### Background to the Invention

Dredge fishing involves a fishing dredge being pulled along the seabed to disturb sea-life deposited or partially buried therein, propel it a small distance above the sea-bed and catch it with a net trailing behind the dredge.

The dredging apparatus will comprise a sea-bed engaging portion, a net, lines to attach the apparatus to the other vessel and so forth. Chains or some form of rake formation may be used to disturb the sea-bed itself, and often referred to as a sword bar or tooth bar.

The sword bar will comprise an elongate mounting bar from which extend a plurality of projections or "teeth" along the longest edge of the bar.

The sword or tooth bars are typically formed from a flat bar portion, to which mounting brackets and the projections ("swords" or "teeth/tooth") are individually welded to the bar. This process has numerous drawbacks: costly, time-consuming, HAZ issues, etc.

Moreover, the ragged nature of such bars tend to disturb more of the sea-bed than necessary, and the welding may aggravate the tendency of individual swords/teeth to break off.

Potential issues that arise from the common existing multi-part:
- Increased environmental impact:
   o Custom jig tooling is required to minimise tooth pitch spacing variations. This required materials and manufacturing processes which all require energy consumption to produce, releasing CO2 into the atmosphere.
   ∘ Welding operations that are common practice is an energy intensive process and requires welding consumables, also contributes to negative environmental impacts.
   ∘ The manufacture of multiple parts also increased the manufacturing effort and subsequent emissions into the environment form their production.
- Marine & Biosphere Impacts:
   o Variations in the tooth pitch spacing can result in an undersized or oversized produced being captured which can have a negative impact on the sustainability of the fishery and the wider marine environment.
   ∘ There is considered to be an increased risk of failure with a multi-part welded assembly which can lead to a trail of debris being left on the sea bed upon breakage of the equipment from various modes of failure.

FR 1 251 283 A discloses a sword bar for dredge fishing according to the preamble of claim 1.

### Summary of the Invention

According to the present invention defined in claim 1 there is provided a sword bar for dredge fishing comprising a mounting bar upon which one or more teeth are integrally formed. "Teeth" includes the singular "tooth".

By "integrally formed" this will be understood to comprise all non-welding processes, such as CNC-machining, casting, forging, moulding, 3-D printing, additive manufacture and other cutting operations.

The teeth and bar are formed from the single piece of material.

This will typically be a metal and may be more specifically a suitable marine grade steel or other material suitable for the corrosive environment in which the sword bar will be used.

It will be understood that a sword bar may comprise one or more mounting bar elements, such as linking a plurality of such mounting bars together to form a sword bar.

The mounting bar and teeth occupy the same plane.

The teeth are substantially isosceles triangular in form.

They comprise two sides or legs which project from the mounting bar with a vertex where the sides or legs meet.

The one or more teeth have one or more leading edges.

The one or more leading edges are rounded.

The one or more leading edges will be coincident with the vertex.

Fillets may be provided between the teeth sides/legs and the mounting bar.

There is also provided dredge fishing apparatus including one or more sword bars according to the first aspect of the present invention.

There is also provided a method of forming a sword bar suitable for use in fishing comprising the steps of:
integrally forming one or more teeth onto a mounting bar.

By "integrally formed" this will be understood to comprise all non-welding processes, such as CNC-machining, casting, forging and other cutting operations.

The method may involve taking a sheet or block of material and cutting it into the desired shape.

Two or more sword bars may be formed from a single blank.

Optional features of the present invention may equally apply to other aspects, *mutatis mutandis.*

### Brief Description of the Drawings

Embodiments of the present invention will now be described, by way of example only, with reference to the following drawings, in which:

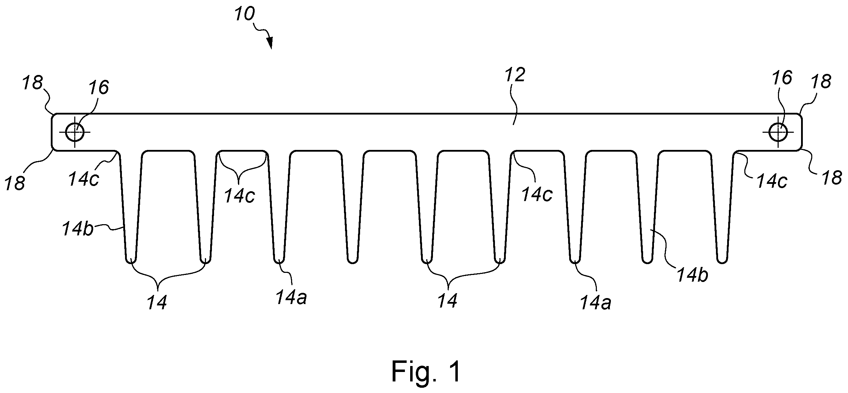

- Fig. 1: is an elevation of a first embodiment sword bar according to the present invention;

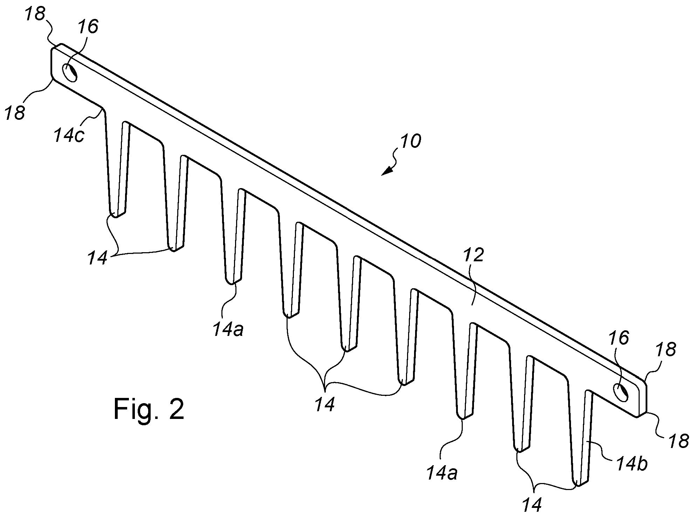

- Fig. 2: is a perspective view of the sword bar of Fig. 1.

A sword bar according to the present invention is depicted in the Figs, generally referred to as 10. The sword bar 10 is usable in dredge fishing, and will provide one component within an otherwise state-of-the-art dredging apparatus further comprising nets, winches, securing lines, a trawler vessel, etc.

The sword bar 10 comprises a mounting bar 12 from which a plurality of teeth 14 extend. The mounting bar 12 and teeth 14 are form from a single piece of material which, in this particular embodiment, is a suitable grade of marine steel. The mounting bar 12 is suitably elongate.

The sword bar 10 is formed by cutting the teeth 14 and mounting bar 12 from a single piece of material or blank, although it will be understood that the sword bar may be integrally formed from other processes. It will be further understood that two or more sword bars 10 may be formed or cut from a single blank, given the spacing of the sword projections.

In the present embodiment, the mounting bar 12 is approximately 813mm in length, 40mm wide and 12mm thick. Two mounting orifices 16 are provided at either end of the mounting bar 12, to enable the sword bar 10 to be attached to further dredge-fishing apparatus (not shown). The mounting orifices 16 are approximately 20mm in diameter.

The four corners 18 of the mounting bar 12 are filleted, with two corner fillets 18 located adjacent the mounting orifices 16.

Each tooth 14 extends approximately 125mm from the mounting bar. The swords projections 14 are substantially triangular in form, specifically a narrow isosceles triangle with rounded leading edges 14a and sides or legs 14b. The vertex of the triangle defining the projections is approximately 6°. The teeth 14 are approximately 12mm thick, the same as the thickness of the mounting bar 12. The centre points of the rounded edges 14a are consecutively space apart approximately 96mm between subsequent edges 14a. As can be seen, being formed from a planar blank, the mounting bar 12 and teeth 14 all occupy the same plane.

Fillets 14c are provided at the junction between the mounting bar 12 and the sword sides 14b.

In use, the sword bar 10 is attached to a suitable frame (not shown) of a fishing dredge (not shown) in a known manner. The fishing dredge (not shown) will also be provided with a net or nets (not shown) and other known parts. This will be deployed from a suitable vessel for dredge-fishing.

The teeth 14 drag along and may dig into the sea-bed disturbing marine life ensconced therein and allowing them to be caught by the nets.

The rounded edges 14a and fillets 14c mitigate stresses in the sword bar 10 caused by the dragging through the sea-bed.

The invention is not limited to the embodiments hereinbefore described but may be modified in both construction and detail.

For example, the number of sword projections may be varied from the nine disclosed in the described embodiment.

Furthermore, the specific dimensions and angles may be varied without departing from the scope of the present invention. For example, the teeth may extend between 100mm and 150mm, although ideally around the 120mm to 130mm range. Spacing between adjacent teeth points may be in the range of 80mm to 120mm, although ideally within the 90mm to 100mm range.

The mounting bar and integrally formed projections may be welded or otherwise joined to some larger substrate to form a sword bar.

The mounting bar may be reinforced against bending moments. Reinforcement may be achieved by welding a strengthening rib or backing bar to the mounting bar or introducing a crimp/fold/corrugation into the mounting bar.

## Claims

1. A sword bar (10) for dredge fishing comprising a mounting bar (12) upon which one or more teeth (14) are integrally formed from a single piece of material, wherein the mounting bar (12) and teeth (14) occupy a single plane, wherein the teeth (14) are isosceles triangular in form, wherein the teeth (14) comprise two sides or legs which project from the mounting bar (12) with a vertex where the sides or legs meet, wherein the one or more teeth (14) have leading edges (14a), and wherein the leading edges (14a) are rounded and **characterized in that** there are provided two mounting orifices (16) at either end of the mounting bar (12) which also occupy the single plane.

2. A sword bar (10) of claim 1 wherein the leading edges (14) is coincident with the vertex.

3. Dredge fishing apparatus including one or more sword bars (10) according to any preceding claim.

## Patentansprüche

1. Schwertstange (10) für die Baggerfischerei, umfassend eine Montagestange (12), auf der ein oder mehrere Zähne (14) integral aus einem einzigen Materialstück geformt sind, wobei die Montagestange (12) und die Zähne (14) eine einzige Ebene einnehmen, wobei die Zähne (14) die Form eines gleichschenkligen Dreiecks aufweisen, wobei die Zähne (14) zwei Seiten oder Schenkel umfassen, die von der Montagestange (12) mit einem Scheitelpunkt vorstehen, an dem die Seiten oder Schenkel zusammentreffen, wobei einer oder mehrere Zähne (14) Vorderkanten (14a) aufweisen, und wobei die Vorderkanten (14a) abgerundet sind, und **dadurch gekennzeichnet, dass** zwei Montageöffnungen (16) an jedem Ende der Montagestange (12) vorgesehen sind, die ebenfalls die einzige Ebene einnehmen.

2. Schwertstange (10) nach Anspruch 1, wobei die Vorderkanten (14) mit dem Scheitelpunkt zusammenfallen.

3. Baggerfischereivorrichtung, die eine oder mehrere Schwertstangen (10) nach einem der vorstehenden Ansprüche umfasst.

## Revendications

1. Barre à lames (10) pour la pêche à la drague, comprenant une barre de montage (12) sur laquelle une ou plusieurs dents (14) sont formées d'une seule pièce de matériau, la barre de montage (12) et les dents (14) occupant un seul plan, les dents (14) étant de forme triangulaire isocèle, les dents (14) comprenant deux côtés ou segments qui font saillie à partir de la barre de montage (12), avec un sommet où les côtés ou segments se rejoignent, la ou les dents (14) comportant des bords d'attaque (14a) et les bords d'attaque (14a) étant arrondis, la barre à lames étant **caractérisée en ce que** deux orifices de montage (16) sont situés à chaque extrémité de la barre de montage (12) et occupent également le seul plan.

2. Barre à lames (10) selon la revendication 1, les bords d'attaque (14) coïncidant avec le sommet.

3. Appareil de pêche à la drague, comprenant une ou plusieurs barres à lames (10) selon l'une quelconque des revendications précédentes.
